# EUROPEAN PATENT SPECIFICATION

(11) **EP 0 953 895 B1**
(45) Date of publication and mention of the grant of the patent: **03.08.2005**
(21) Application number: 99303180.6
(22) Date of filing: 23.04.1999
(51) Int. Cl.: G06F 3/14

(54) **Analogue/digital display adaptor and a computer system having the same**
Analog-Digital Anzeigeadapter und Rechnersystem mit diesem Adapter
Adapteur analogique-numérique pour affichage et système d'ordinateur utilisant cet adapteur

(30) Priority: 29.04.1998 KR 9815395; 16.10.1998 KR 9843766
(43) Date of publication of application: 03.11.1999
(73) Proprietor: Samsung Electronics Co., Ltd., Suwon, Kyunggi-do (KR)
(72) Inventor: Shin, Seung-Gi, Kwonseon-ku, Suwon, Kyunggi-do (KR)
(74) Representative: Boakes, Jason Carrington

(56) References cited:
- EP-A- 0 419 910
- EP-A- 0 802 519
- JP-A- 2 277 123
- US-A- 5 150 109
- US-A- 5 479 183
- "VESA Plug and Display Standard Version 1" 11 June 1997 (1997-06-11) , VIDEO ELECTRONICS STANDARDS ASSOCIATION , SAN JOSE, CALIFORNIA, USA XP002123075 * paragraphs [01.1],[0003]-[03.2],[11.1.2],[0013]-[13.3 .1], *

## Description

The present invention relates to computer systems, and more particularly to computer systems that support both analogue displays and digital displays.

Conventionally, personal computers are equipped with cathode ray tube (CRT) monitors. Portable computers such as laptop and notebook chiefly use flat panel liquid crystal displays. Occasionally, a desktop computer is equipped with a liquid crystal display (LCD) monitor, although it is costly to do so. Liquid crystal displays are currently considered as a substitute for the CRT display for their compactness and low power consumption.

A conventional desktop personal computer is shown in Fig. 1, in which a CRT monitor 100 and keyboard 200 are coupled to a tower type personal computer main unit 300 as indispensable input/output devices. The CRT monitor 100 and keyboard 200 are connected to the computer main unit 300 via signal cables 110 and 210 as shown in Fig. 2. These signal cables 110 and 210 are provided at one end with connectors 111 and 211 so they can be coupled with the counterpart connectors or ports 321 and 312 provided in the computer main unit. As shown in Fig. 3, the video port 321 is mounted in a video adapter card 320 installed in an expansion slot 311 of the system mother board 310. The keyboard port 312 is also mounted in the mother board 310.

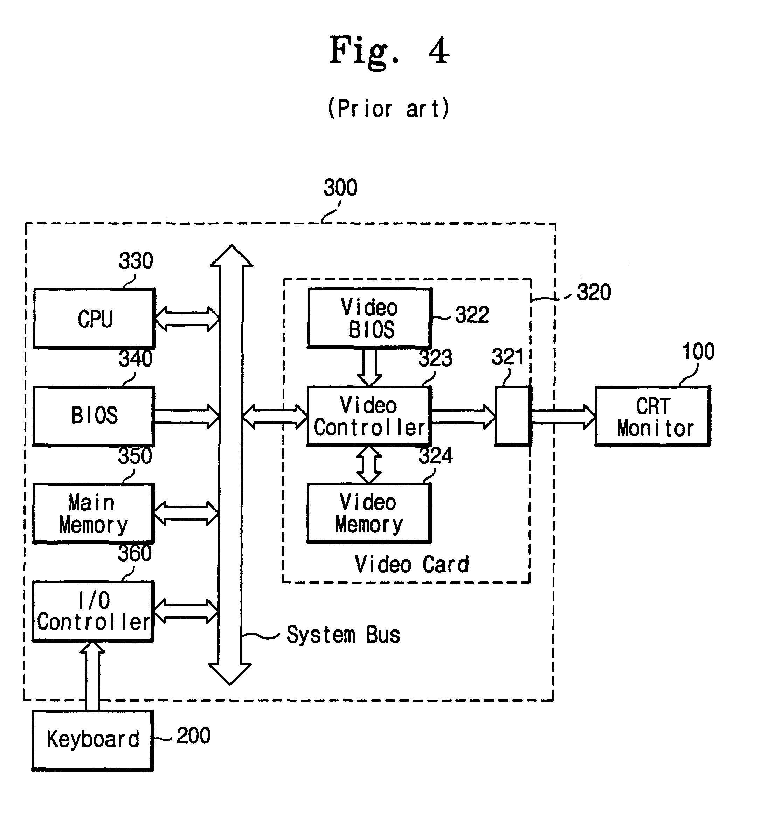

A configuration of the conventional computer system having such a connection can be seen in Fig. 4. The computer system comprises a central processing unit (CPU) 330, a basic input/output system (BIOS) 340, a main memory 350, an I/O controller 360, and a video card 320. The video card 320 includes a video BIOS 322, a video controller 323, a video memory 324, and a connector 321. The video controller 323 generates analogue R, G, B video signals corresponding to the stored image in the video memory 324 and transmits serial video signals along with horizontal and vertical synchronising signals to the CRT monitor 100 through the connector 321. The connector 321 commonly uses a 15-pin D-Sub female VGA connector. Most desktop computers are designed for use with a CRT monitor.

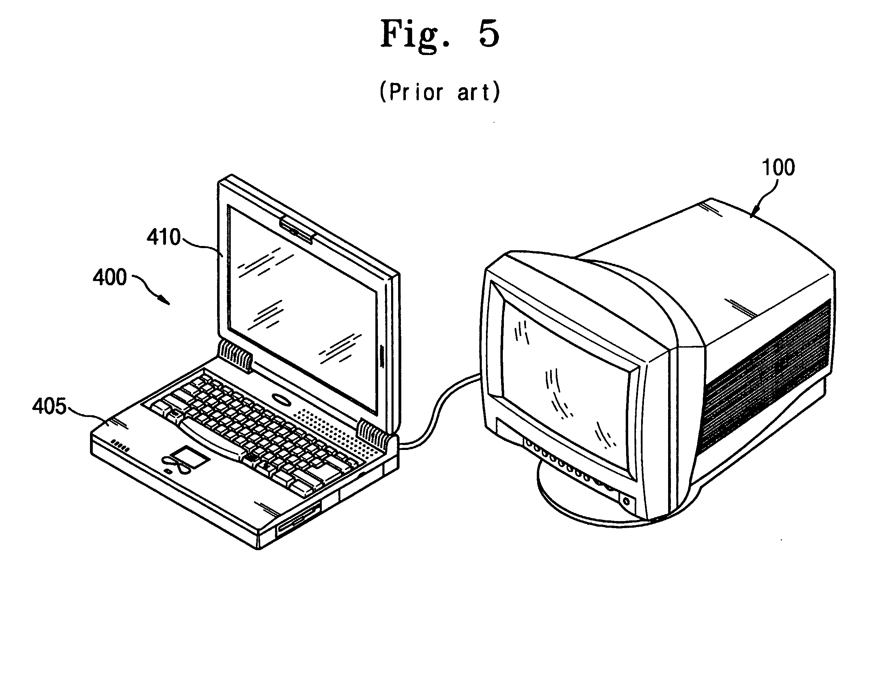

In case of a portable computer, an LCD panel is usually used as a main display. An extra, external, CRT monitor can optionally be used as shown in Fig. 5. The LCD panel 410 is hingedly attached to the main body 405 of notebook computer 400, to face a user in the open position, and to form a lid covering the top portion of the main body 405 in the closed position. The CRT monitor 100 can be selectively connected with the notebook computer 400, if an external video port is provided in the notebook computer.

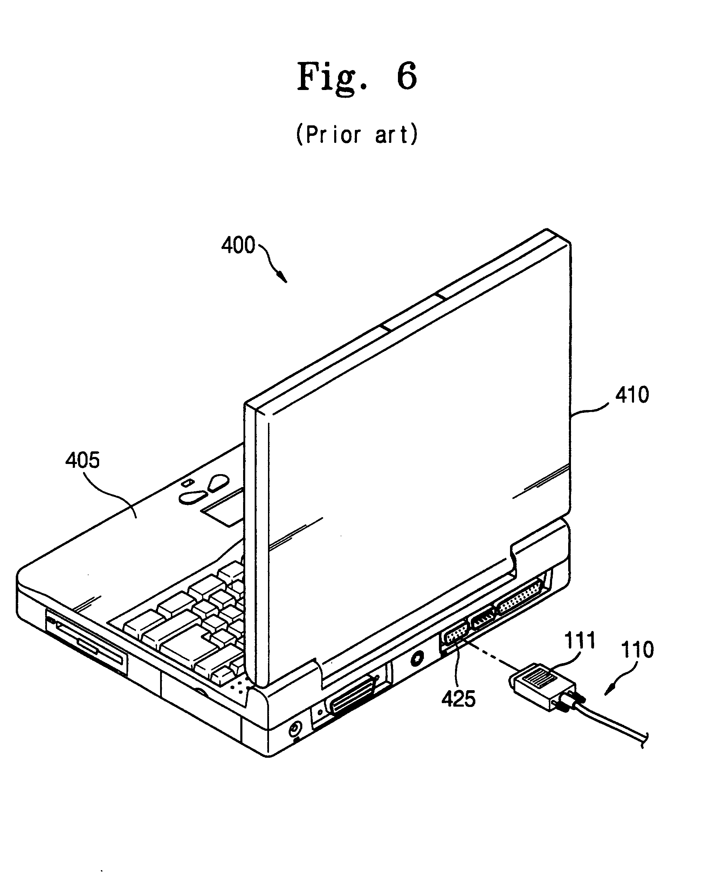

Fig. 6 shows the rear side of the notebook computer 400, where an external video port 425, preferably a 15-pin D-Sub female connector is provided, along with serial/parallel ports. The CRT monitor cable 110 has a 15-pin D-Sub male connector 111 to be coupled with the external video port 425 when required.

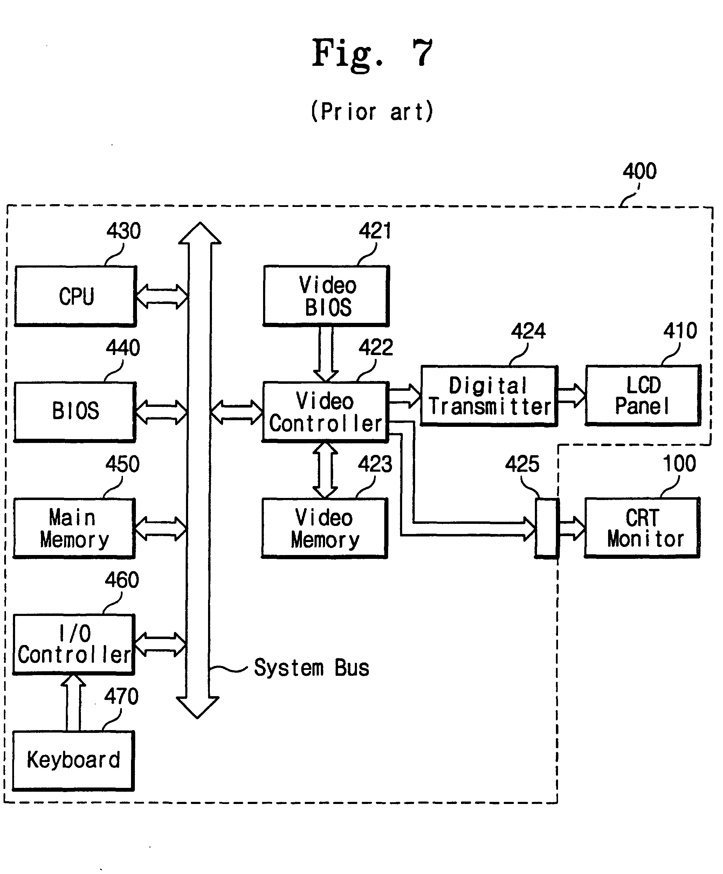

Fig. 7 shows a configuration of a conventional notebook computer system as described above. The notebook computer system comprises a central processing unit (CPU) 430, a BIOS 440, a main memory 450, an I/O controller 460, a video BIOS 421, a video controller 422, a video memory 423, and a digital transmitter/receiver 424. The digital transmitter/receiver 424 is a high speed digital video interconnect device for sending video memory data to the LCD panel 410 under control of the video controller 422. The video controller 422 also generates analogue R, G, B video signals corresponding to the stored image in the video memory 423 and transmits serial video signals along with horizontal and vertical synchronising signals to the CRT monitor 100 through the VGA connector 425. The system has a video output path control function that can selectively operate the LCD panel 410 and/or the CRT monitor 100 in response to a special key combination input on the keyboard 470. Both LCD panel 410 and CRT monitor 100 can be made to operate simultaneously in a dual display mode by suitable key manipulation.

Display monitors adopting an LCD panel have been developed to be used with desktop personal computers.

The LCD monitor has advantages of low power consumption and low electromagnetic wave radiation. LCD monitors commonly include interface circuitry that converts analogue video signals supplied from the system host (computer main unit) into digital video signals in order to drive the pixels of the LCD panel. In particular, advanced digital display systems use an all-digital flat panel display interface that eliminates the analogue-to-digital conversion of the video signals and transmits digital video data from a host video controller to the LCD monitor through a high speed data channel. This solves the digital interface design problems such as increasing clock rates, data lines, and cable length. In this system, the video controller circuitry converts the video memory data into transferable form and reconstructs it once it gets to the display panel.

The following background art is known:
US-A-5 150 109 discloses a controller card for a PC which can provide VGA standard signals to drive conventional cathode ray tubes and flat panel displays.
The "VESA Plug and Display Standard Version 1" discusses the VESA Plug and Display standard (Copyright 1997 by Video Electronics Standards Association) which supports hot-plugging of a digital display device. A digital transmitter of an image source is disabled when a corresponding digital monitor is not operational.
EP-A-0 802 519 discloses a notebook which drives an internal LCD monitor and an external CRT monitor. In one embodiment both display devices may be LCD monitors.
EP-A-0 419 910 discloses that when a flat-panel display is not in use a display power supply control circuit may inhibit supply of display drive power to a flat-panel display.
US-A-5 479 183 discloses how a computer with an internal display and optional external monitor can be controlled.
JP-2-277 123 discloses a computer with two displays. A signal is generated to indicate whether a CRT display is operational or not. The signal is sent to a CRT control block and the display is immediately switched to a plasma display if the signal indicates that the CRT display is not operational.

Occasionally, either the external monitor cable fails to connect with the external video port of a notebook computer, or the external monitor is not supplied with power. In either case, when the notebook computer system is set to output video signals through the external video port, the external monitor will not operate and thus nothing appears on the screen of the external monitor.

The present invention is intended to address the problems of the prior art, and it is therefore an aim of the invention to provide a display adapter capable of supporting digital displays. Preferably, such a display adapter will also be capable of supporting analogue displays.

It is another aim of the invention to provide a computer display system having a display adapter capable of connecting to one of alternative displays depending upon the monitor cable connection state.

It is a further aim of the invention to reduce power consumed in a display adapter depending upon a monitor cable connection state.

Preferred embodiments of the invention are defined in claims 1, 6, 8 and 13.

The display adaptor according to embodiments of this invention allows a video signal to be sent to one of the LCD (digital) monitor and CRT (analogue) monitor, any one that is connected with the video card, regardless of the video start-up direction or video output path set in the computer system. Further, the display adapter of the invention is capable of reducing power consumed in the digital transmitter when the monitor cable is disconnected from the computer system.

This invention may be further understood and its characteristics and advantages will become apparent by reference to the following description of certain embodiments, given by way of examples only, in conjunction with the accompanying drawings in which:

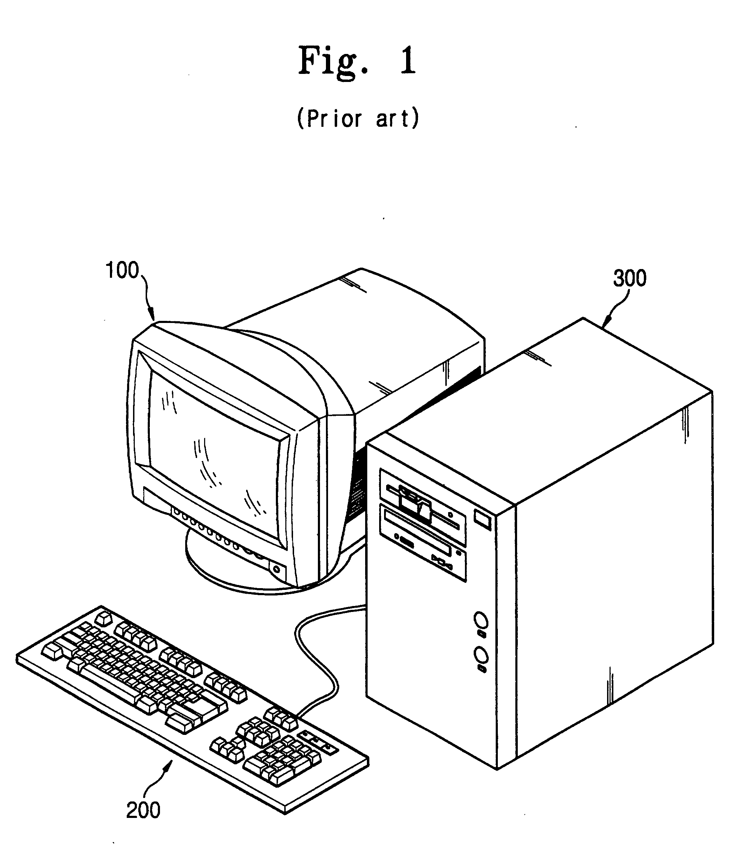

Fig. 1 is an exterior view of a conventional desktop personal computer with a CRT monitor;

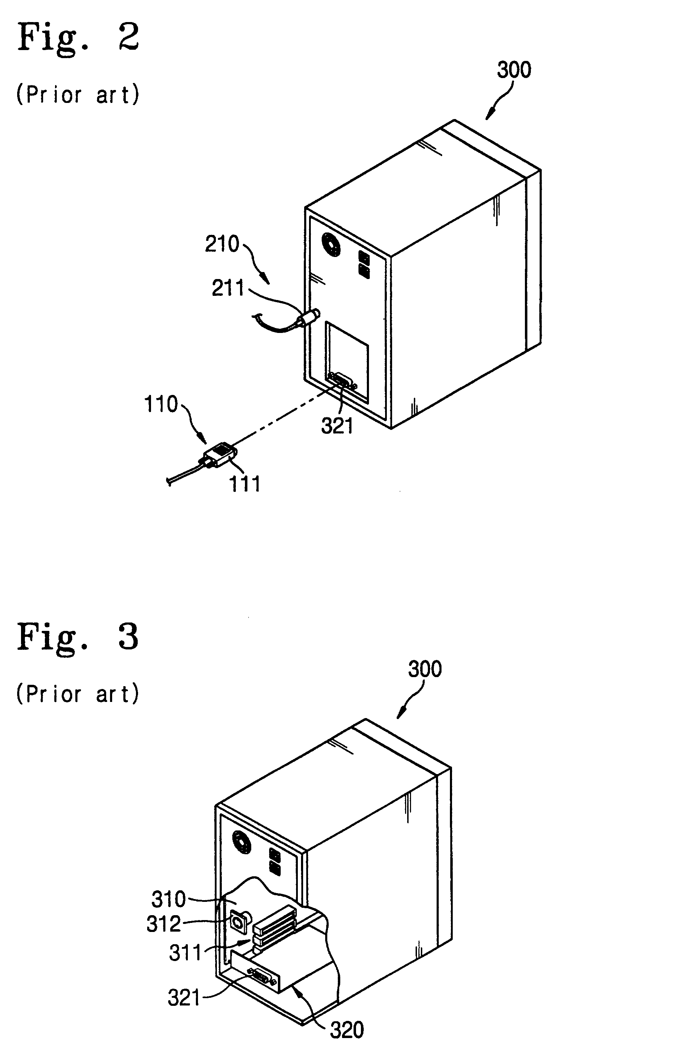

Fig. 2 is a rear view of the desktop computer of Fig. 1, showing a connection of the CRT monitor cable with a video port;
Fig. 3 is a view similar to that of Fig. 2 showing a video card installed in an expansion slot of the computer;
Fig. 4 is a block diagram of a conventional computer system having a VGA card;
Fig. 5 is an exterior view of a conventional notebook computer, showing a connection of an extra, external, CRT monitor;
Fig. 6 is a rear view of the notebook computer of Fig. 5, for showing connection of a CRT monitor cable with an external video port;
Fig. 7 is a block diagram of a conventional notebook computer system having a VGA card, an LCD panel interface and an external CRT port;

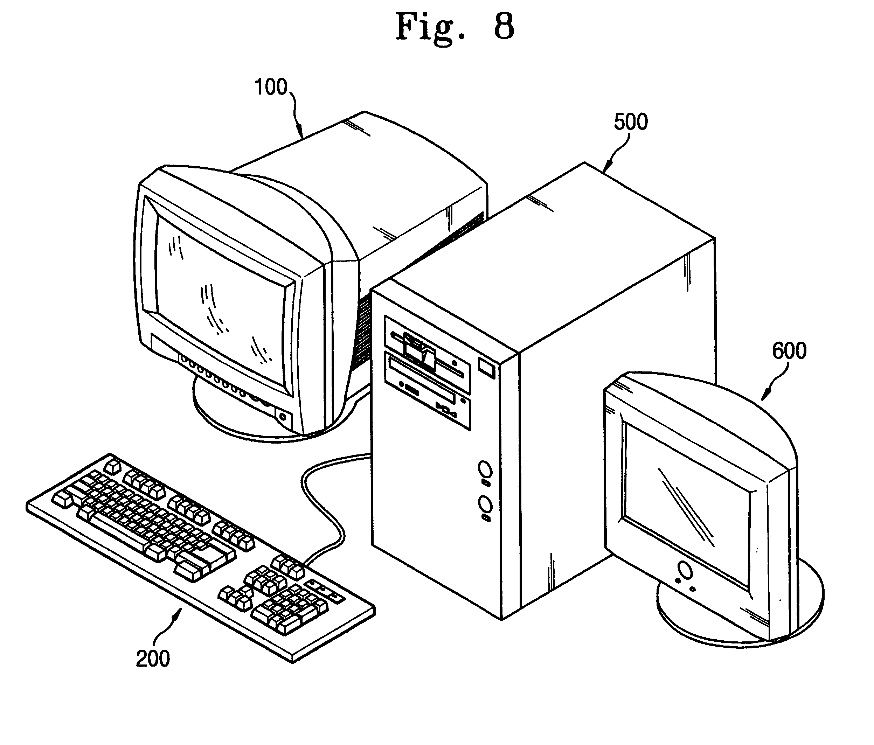

Fig. 8 is an exterior view of a desktop computer having an analogue/digital video adapter, showing connection of a CRT monitor and an LCD monitor;

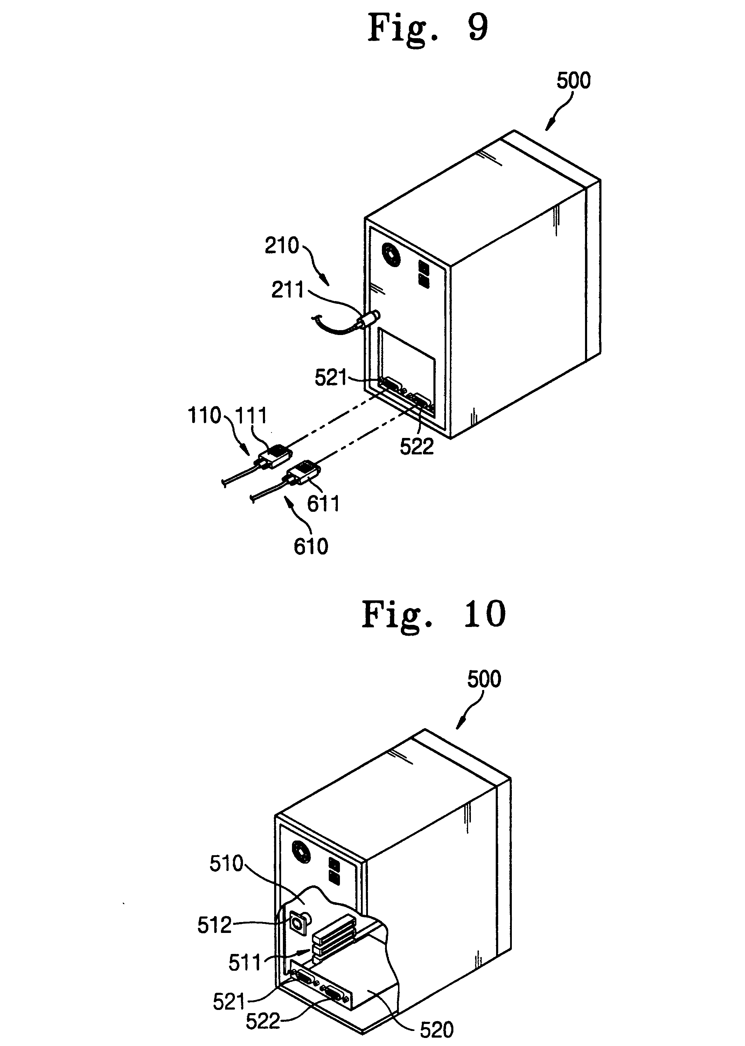

Fig. 9 is a rear view of the desktop computer of Fig. 8, showing connection of the CRT monitor cable and the LCD monitor cable with two video ports;
Fig. 10 is a view similar to that of Fig. 9, showing a VGA card having two video ports installed in an expansion slot of the computer;

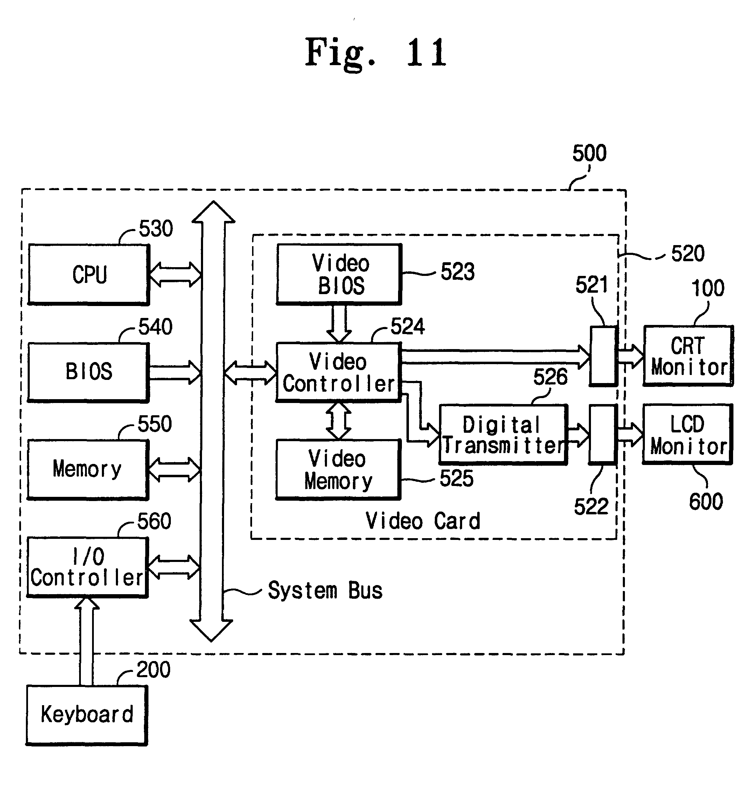

Fig. 11 is a block diagram of a desktop computer system having a VGA card in accordance with an embodiment of the invention;

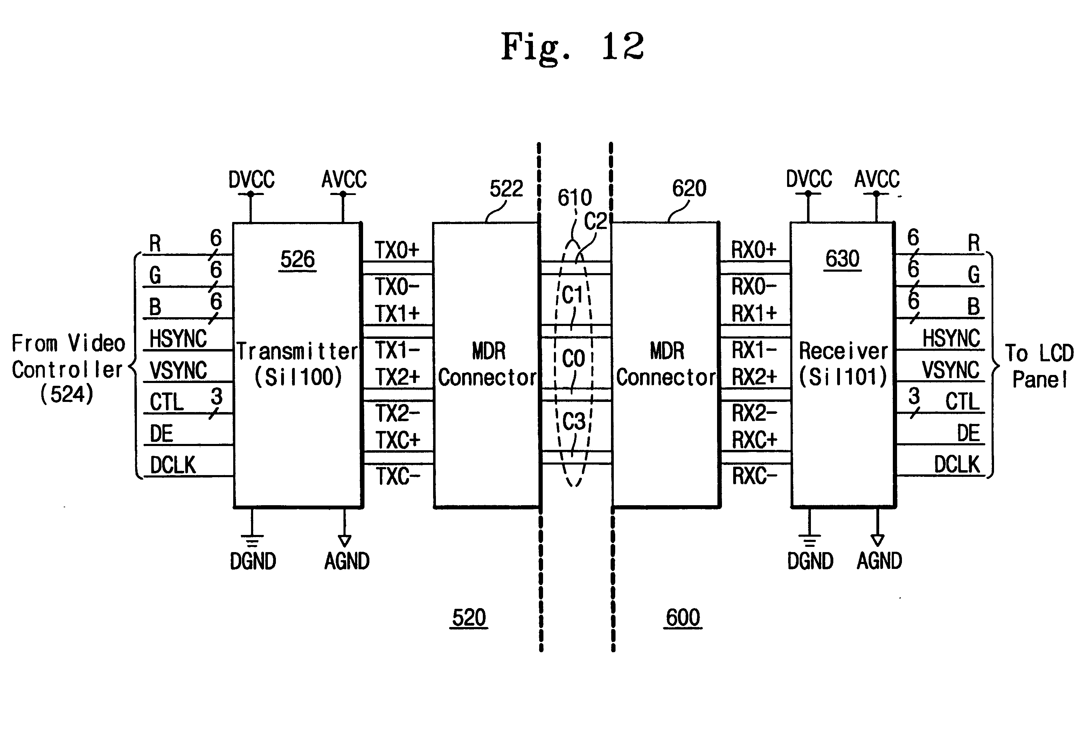

Fig. 12 is a schematic diagram of the digital signal interface between the transmitter of the VGA card and the receiver of the LCD monitor;

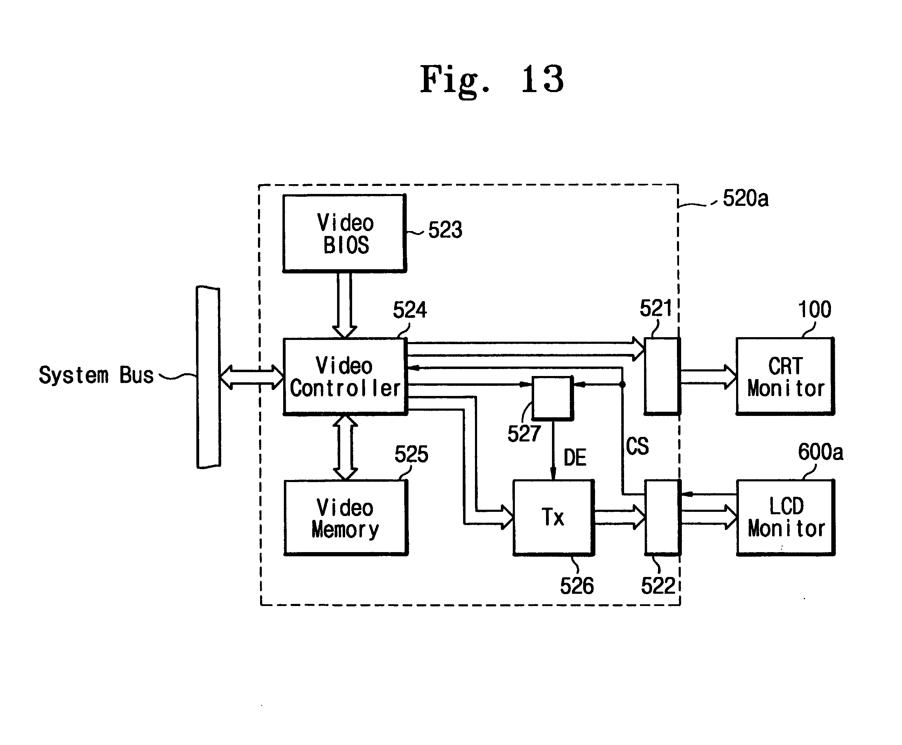

Fig. 13 is a block diagram of the VGA card having an LCD monitor cable sensing circuit in accordance with an embodiment of the invention;

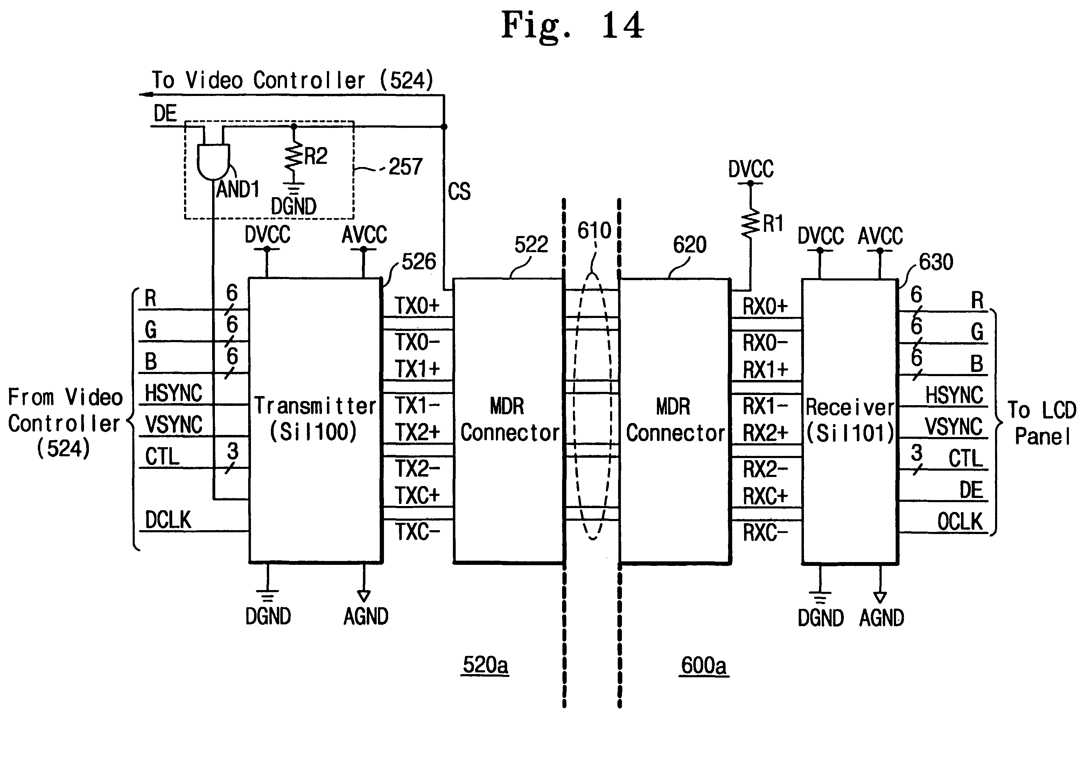

Fig. 14 is a detailed diagram showing an LCD monitor cable sensing circuit;

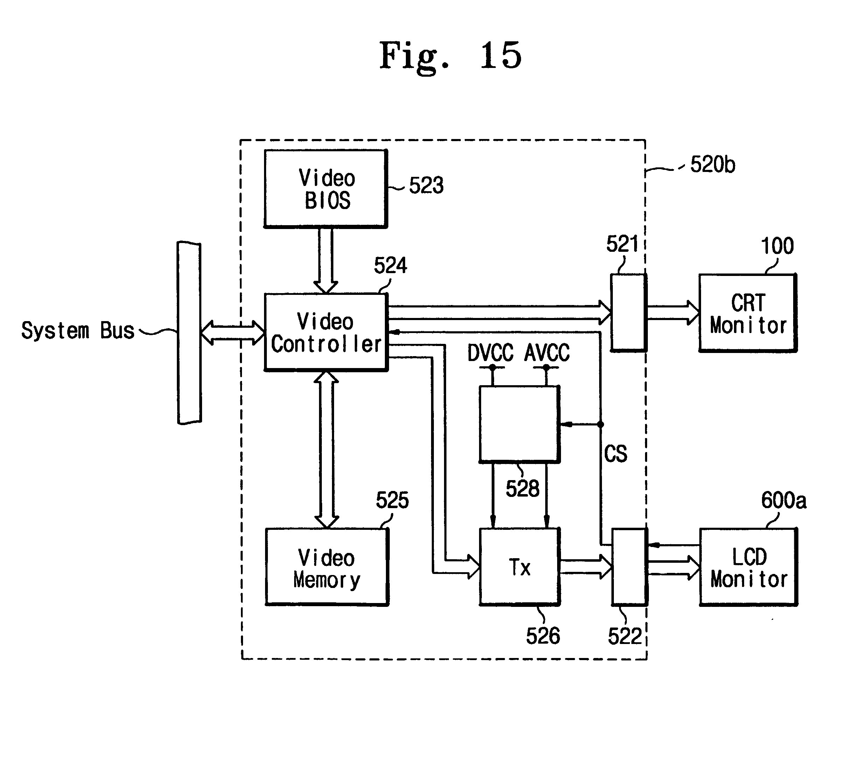

Fig. 15 is a block diagram of the VGA card having a power supply control circuit for the transmitter in accordance with an embodiment of the invention;

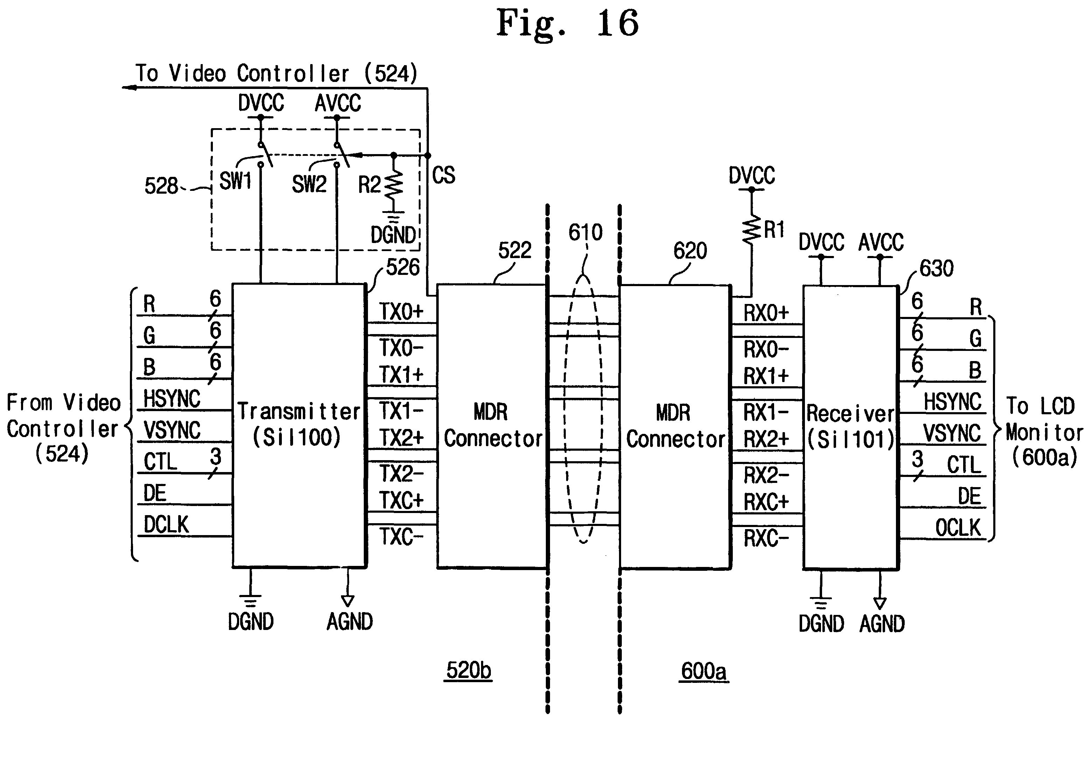

Fig. 16 is a schematic diagram of the power supply control circuit shown in Fig. 15;

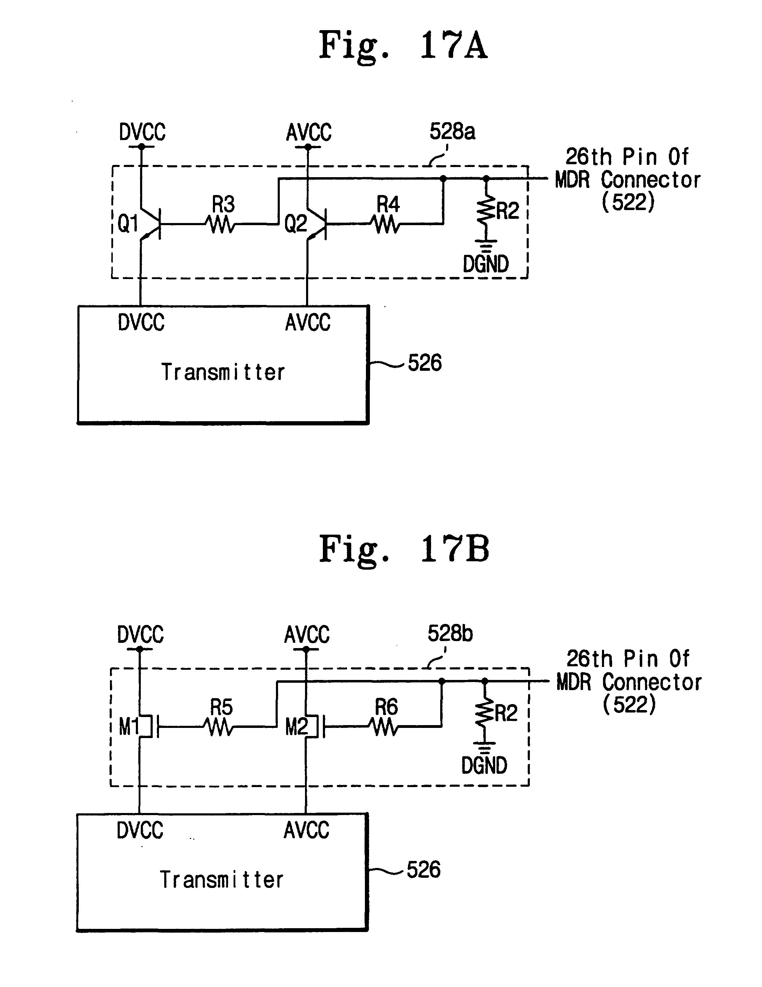

Figs. 17A-17D are schematic circuit diagrams showing examples of a power supply control circuit;

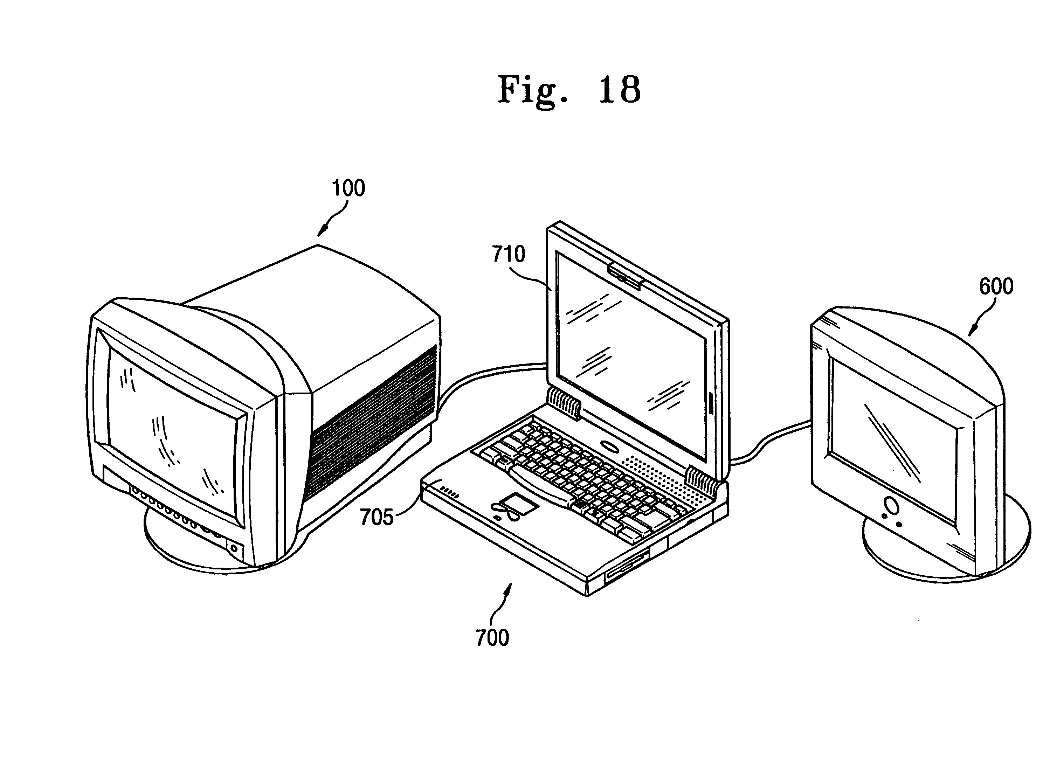

Fig. 18 is an exterior view of a notebook computer having an analogue/digital video adapter, showing connection of an external CRT monitor and an LCD monitor;

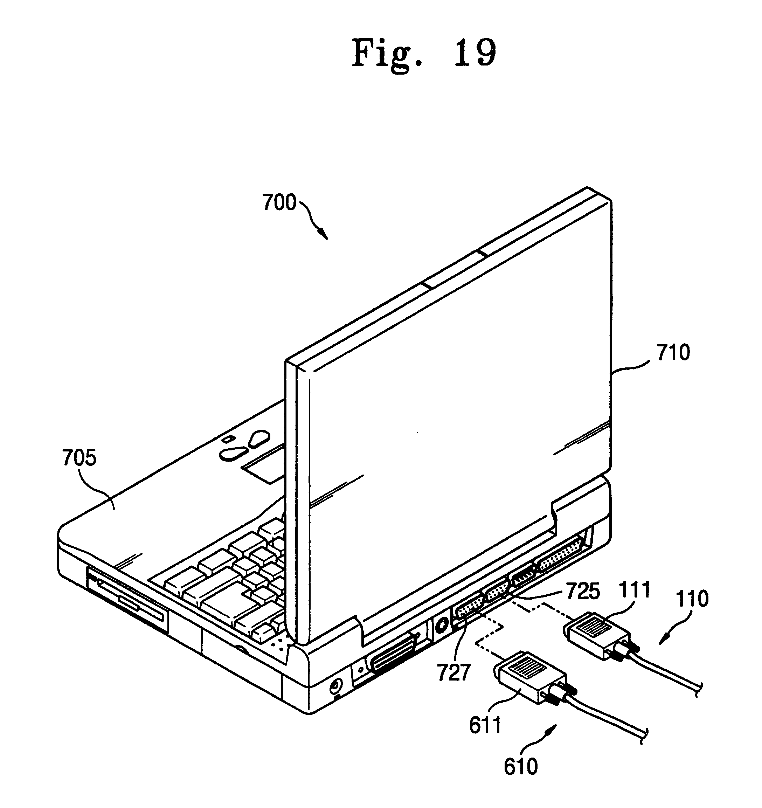

Fig. 19 is a rear view of the notebook computer of Fig. 18, showing connection of a CRT monitor cable and an LCD monitor cable with two video ports; and

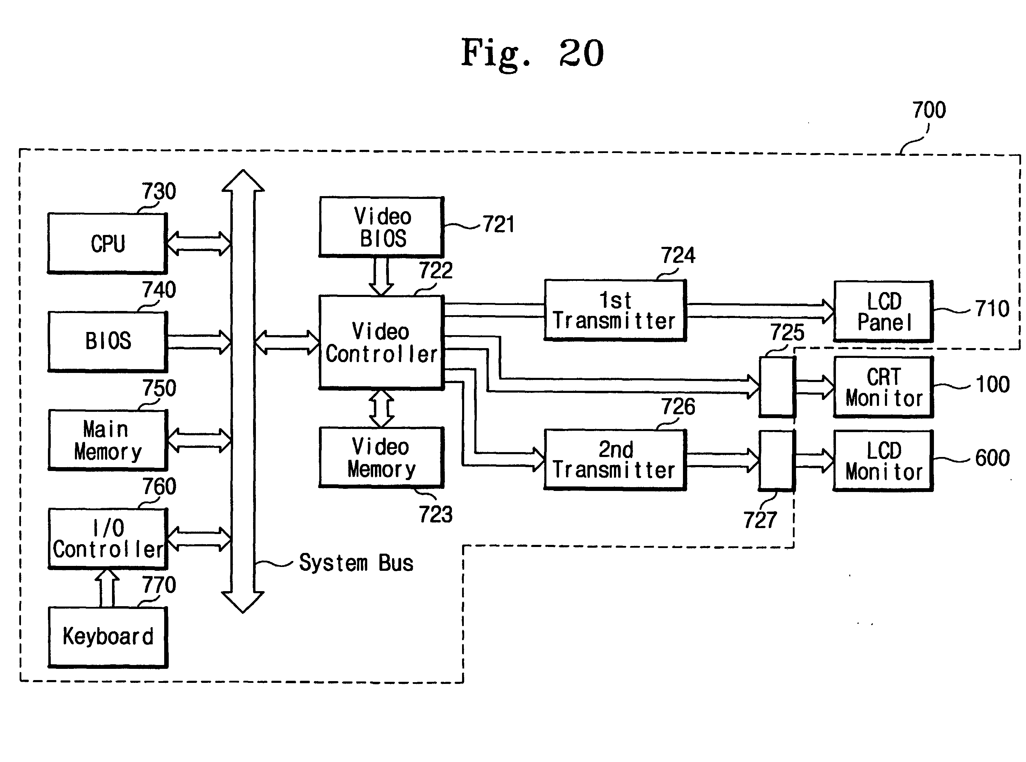

Fig. 20 is a block diagram of a notebook computer system having a VGA card with an external CRT port and an LCD port in accordance with an embodiment of the invention.

Referring to Fig. 8, there is shown a desktop computer main unit 500, connected to a CRT monitor 100 and an LCD monitor 600. The LCD monitor 600 is a digital display that is digitally interfaced with the computer main unit 500. The computer main unit 500 has a display adapter having dual display function for a VGA analogue video type display 100 and the digital display 600 in accordance with an embodiment of the invention. Reference number 200 denotes a keyboard for use with the computer main unit 500.

The CRT monitor 100 and LCD monitor 600 are connected to the computer main unit 500 via signal cables 110 and 610 as shown in Fig. 9. These signal cables 110 and 610 are provided at one end with connectors 111 and 611 so that they can be coupled with the counterpart connectors or ports 521 and 522 provided in the computer. The keyboard signal cable 210 is also connected by a connector 211.

As shown in Fig. 10, two video ports 521 and 522 are mounted in a display adapter or video card 520 installed in an expansion slot 511 of the system mother board 510. The keyboard port 512 is also mounted on the mother board 310.

A computer system adopting such a video card 520 is shown in Fig. 11. The computer system comprises a central processing unit (CPU) 530, a BIOS 540, a main memory 550, an I/O controller 560, and a video card 520. The video card 520 includes a video BIOS 523, a video controller 524, a video memory 525, a digital transmitter 526, a VGA analogue connector 521, and a VGA digital connector 522.

The video controller 524 generates analogue R, G, B video signals corresponding to the stored image in the video memory 525 and transmits the serialised video signals along with horizontal and vertical synchronising signals to the CRT monitor 100 through the connector 521. The connector 521 uses a 15-pin D-Sub female VGA connector. Further, the video controller 524 outputs parallel digital video data and the synchronising signals to the transmitter 526. The transmitter 526 is made up of a high-speed digital video interconnect device, for example Sil 100 chip, a PanelLink™ product family of Silicon Images, Inc. This transmitter 526 is used with a corresponding receiver chip, for example Sil 101, which is usually provided in the digital LCD monitor part. Basically, the transmitter/receiver is provided for sending video data to digital displays, and supporting VGA to XGA resolutions for TFT-LCD panels. The Sil 100 transmitter chip 526 incorporates an advanced coding scheme to enable well-known VESA Transition Minimised Differential Signalling (TMDS) for reduced electromagnetic interference (EMI) across copper cables, and DC-balancing for data transmission over fibre optics.

To maximise data recovery accuracy, the Sil 101 receiver chip oversamples and makes use of a data recovery algorithm to select the most reliable data sampling points.

As shown in Fig. 12, the transmitter 526 receives parallel video data from the host video controller 524. Transmitter 526 receives 6-bit video data (R, G, B), horizontal and vertical synchronising signals (HSYNC, VSYNC), 3-bit control signal (CTL), display enable signal (DE), and a clock signal (DCLK). The transmitter 526 encodes and serialises the parallel input data by the use of an internal PLL circuit. The serialised data is then transmitted to the receiver chip 630 of the LCD monitor 600 over four low voltage differential channels TX0, TX1, TX2 and TXC, the amplitude of which is set by the swing control circuit provided in the transmitter 526. Each channel consists of a pair of lines, each line being shown in the drawings by addition of + and - symbols. Red (R) video data is sent over a pair of lines TX0+ and TX0-. Green (G) video data is sent over a pair of lines TX1+ and TX1-. Blue (B) video data is sent over a pair of lines TX2+ and TX2-. A differential clock signal is sent over a pair of lines TXC+ and TXC-, constituting the differential clock channel.

Further, the transmitter 526 is supplied by two voltages DVCC and AVCC. The voltage DVCC is an operating voltage for the transmitter 526, for example 3.3 Volts. The voltage AVCC, nominally 3.3 Volts, is provided for the differential level swing control circuit (not shown) of the transmitter 526. Reference label AGND denotes the ground of the differential signalling circuit, and DGND denotes the ground of the transmitter chip 526. Details of the TDMS interconnect scheme and the low voltage differential signalling (LVDS) method is described in the PanelLink™ Technology Product Family Overview, Sil/DS-0001-B, Rev. 1.0, pp. 11-24, and the relevant parts have been incorporated herein for reference.

The output signal lines of the transmitter 526 are connected to a digital video port 522, called MDR connector, provided in the video card 520. A signal cable 610, preferably made by flex or twisted pair cables, is provided to connect the MDR connector 522 of the video card 520 to the LCD monitor 600 through a counterpart MDR connector 620. Further, signal cable 610 consists of three data channels, C2, C1 and C0 (red, green and blue, respectively) and one clock channel C3.

In the LCD monitor 600, the receiver chip 630 receives the differential signals of the serialised video data and clock from the transmitter 526 via the signal cable 610 and the MDR connector 620. Inputs of the receiver 630 are corresponding low voltage differential channels RX0, RX1, RX2 and RXC. Each channel consists of two signal lines such as RX0+ and RX0- for the received R (red) video data. The receiver 630 includes a termination control circuit for the input differential signals, a decoder/deserialiser circuit, and a PLL circuit, all for the recovery of the original parallel data. The receiver chip 630 is also supplied by two voltages DVCC and AVCC.

The voltage DVCC is an operating voltage for the receiver, for example 3.3 Volts. The voltage AVCC, nominally 3.3 Volts, is provided for a differential signal termination control circuit of the receiver 630 (not shown, for simplicity of the drawings).

The recovered parallel data, that is 6-bit video data (R, G, B), horizontal and vertical synchronising signals (HSYNC, VSYNC), 3-bit control signal (CTL), display cable signal (DE), and clock signal (DCLK), are supplied from the receiver 630 to the LCD panel of the digital monitor 600.

As mentioned above, the computer system having a video card 520 such as that shown in Figs. 11 and 12 is capable of using either the CRT monitor 100 or the LCD monitor 600, or simultaneously both two monitors 100 and 600, if desired video output path(s) are selected in the BIOS setup program. The signal cables of the selected monitor(s) should be connected with the corresponding video ports.

However, if the user selects the LCD monitor 600, the cable of the LCD monitor 600 may not actually be connected with the computer system, while the CRT monitor cable is connected. In this case, the video output data of the display adapter (video card) 520 will not be sent to the LCD monitor 600, which results in null display of the monitor screen. Further, even if the desired cable connection is completed, if the selected monitor is not supplied with the power, the monitor will not operate and again, nothing will be displayed on the monitor screen.

In certain embodiments, the present invention provides a solution for monitor selection error and/or cable connection failure, as well as for power failure in the selected monitor.

Fig. 13 shows a video card 520a having an LCD monitor cable sensing circuit in accordance with an aspect of the invention. The video card 520a has the same configuration as that of the video card 520 shown in Fig. 11, except that sensing circuit 527 is provided for detecting the connection state of the LCD monitor cable. If it is found that the LCD monitor cable is connected to the video port 522, the sensing circuit 527 allows the display enable (DE) signal fed from the video controller 524 to be supplied to the transmitter TX, 526. If the LCD monitor cable is not connected with the video port 522, the sensing circuit 527 prevents the display enable (DE) signal from being supplied to the transmitter TX, 426.

Fig. 14 shows a detailed circuit diagram of the LCD monitor cable sensing circuit 527. The sensing circuit 527 includes a sense resistor R1 provided at a terminal of the MDR connector 620 of the LCD monitor part. The resistor R1 is supplied by the operating voltage DVCC. Preferably, one end of the resistor R1 is connected to the 26th pin (not otherwise used) of the MDR connector 620, and the other end thereof is connected to the DVCC line of the monitor part 600a. The counterpart MDR connector pin provided at the video card 520a is connected to an input terminal of the video controller 524. Thus formed is a monitor cable sensing signal (CS) line between the LCD monitor 600a and the video controller 524 of the host computer system, if the monitor cable 610 is correctly connected between the two MDR connectors 522 and 620.

The sensing circuit 527 further includes a logic circuit 257 which consists of an AND gate AND1 and a resistor R2. One input of the gate AND1 is connected with display enable signal line DE from the video controller 524. The other input of the gate AND1 is connected with the monitor cable sensing line directed to the controller 524. The pull-down resistor R2 is connected between the sensing signal line CS and the ground DGND. The output of the gate AND1 is connected to the display enable signal input terminal DE of the transmitter 526.

In operation, when the LCD monitor 600a is powered on and the monitor cable 610 is connected with the MDR connector 522, a high level signal is produced through the resistor R1 and this high level signal, representing connection of the monitor cable 610, is supplied to an input of the video controller 524 as well as to one input of the gate AND1. Then the video controller 524 outputs a high level display enable (DE) signal and this high level signal DE is supplied to another input of the gate AND1. Thus, a high level signal is produced at the output of the gate AND1 and the signal is supplied to the display enable signal DE input terminal of the transmitter 526. With this, the parallel digital video data received from the host video controller 524 can be serialised and transmitted to the receiver chip 630 of the LCD monitor 600 over the four low voltage differential channels of the cable 610.

However, when the monitor cable 610 is disconnected from the connector 522 or if a power failure occurs in the monitor 600a, the monitor cable sensing signal CS can not be supplied to the video controller 524 and the display enable signal DE is disabled, which causes operation of the transmitter 526 to be suspended. Therefore, it is possible to prevent unnecessary power consumption in the transmitter 526, if the monitor cable 610 is disconnected or if a power failure occurs in the LCD monitor 600a.

Further, another solution for the disconnection of the LCD monitor cable can be seen in Fig. 15. In Fig. 15, there is shown a video card 520b having a power supply control circuit 528 for the transmitter, in accordance with an aspect of the invention. The video card 520b of this embodiment has the same configuration as that of the video card 520 shown in Fig. 11, except that the control circuit 528 interrupts the power supply directed to the transmitter 526 if the LCD monitor cable is disconnected from the video port 522. A detailed diagram of the power supply control circuit 528 is shown in Fig. 16.

The power supply control circuit 528 comprises two switches SW1 and SW2 provided between the DVCC and AVCC voltages supply lines, respectively, and the transmitter 526. These switches SW1 and SW2 may be mechanical switches or semiconductor switches. The switches SW1, SW2 are turned on in response to a monitor cable sensing signal CS fed from the LCD monitor cable 610 through the MDR connector 522.

When the monitor cable 610 is disconnected from the connector 522, or a power failure occurs in the monitor 600a, the voltage signal of the cable sensing signal CS can not be applied to the video controller 524 or the driving circuit of the switches SW1 and SW2. Thus, the switches SW1 and SW2 are turned off, and the supply voltages DVCC and AVCC are not supplied to the transmitter 526. Accordingly, it is possible to prevent power consumption in the transmitter 526 when the monitor cable 610 is disconnected from the video connector 522, by effectively cutting off the power supply to the transmitter 526.

Examples of the power supply control circuit 528 are shown in Figs. 17A-17D. In Fig. 17A, the power supply control circuit 528 may comprise two bipolar switching transistors Q1 and Q2 respectively provided between the DVCC or AVCC voltage supply line and the transmitter 526. The bases of transistors Q1, Q2 are commonly connected to the 26th pin of the MDR connector 522 through respective bias resistors R3 and R4. These transistors Q1 and Q2 are activated when the potential of the monitor cable sensing signal CS fed from the LCD monitor cable 610 is applied (through the 26th pin of the MDR connector 522) to the bases of transistors Q1, Q2. Transistors Q1 and Q2 are turned off when the monitor cable 610 is disconnected from the video connector 522, as they are no longer activated by a potential of the monitor cable sensing signal CS.

Similarly, Fig. 17B shows that the power supply control circuit 528 may be comprised of two MOS switching transistors M1 and M2, respectively provided between the DVCC and AVCC voltage supply lines and the transmitter 526. The control gates of transistors M1, M2 are commonly connected with the 26th pin of the MDR connector 522 through respective bias resistors R5 and R6. The transistors M1 and M2 are turned on when the potential of the monitor cable sensing signal CS fed from the LCD monitor cable 610 is applied to the gates of the transistors M1, M2. Transistors M1 and M2 are turned off when the monitor cable 610 is disconnected from the video connector 522 as they are no longer activated by a potential of the monitor cable sensing signal CS.

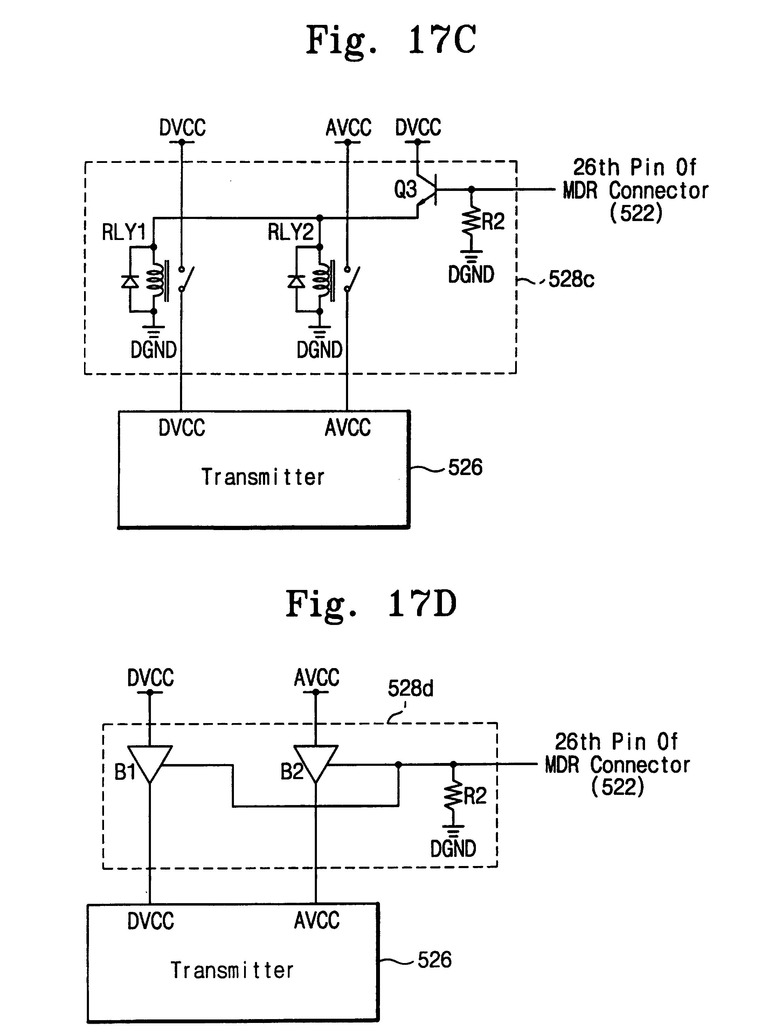

Further, as shown in Fig. 17C, the power supply control circuit 528 may comprise two relay switches RLY1 and RLY2 respectively provided between the DVCC and AVCC voltage supply lines, and the transmitter 526. Each relay switch includes a corresponding actuator coil that is coupled to a driving transistor Q3 coupled to the DVCC voltage supply line. The base of the driving transistor Q3 is connected with the 26th pin of the MDR connector 522. The driving transistor Q3 is turned on when the potential of the monitor cable sensing signal CS is applied and thus each relay coil is activated by the supply voltage DVCC to switch on the relay switches RLY1, RLY2. The transistor Q3 and the relay coils are deactivated when the monitor cable 610 is disconnected from the video connector 522, as Q3 is no longer activated by a potential of the monitor cable sensing circuit.

Furthermore, as shown in Fig. 17D, the power supply control circuit 528 may comprise two buffers B1 and B2, respectively provided between the DVCC and AVCC voltage supply lines and the transmitter 526 as shown in Fig. 17D. Each buffer responds to a logic high level of the monitor cable sensing signal CS and supplies the DVCC and AVCC voltages to the transmitter 526. Each buffer interrupts the supply voltages directed to the transmitter 526 when the LCD monitor cable 610 is disconnected from the video port 522, as the buffer will no longer receive the logic high level of the monitor cable sensing signal CS.

With the above described circuit arrangements, the power supply control circuit 528 of the video card 520 prevents unnecessary power consumption in the digital transmitter 526, if the monitor cable 610 is disconnected or if a power failure occurs in the LCD monitor 600. Further, as the 26th pin of the MDR connector 522, that is the monitor cable sensing signal line, is connected with the video controller 524, the video controller 524 is capable of determining whether the LCD monitor cable 610 is connected with the connector 522. Thus, the video controller 524 may allow the video signal to be sent to either of the LCD monitor 600 and CRT monitor 100, depending on which is/are connected with the video card 520, regardless of the video start-up direction or video output path set in the computer system.

Referring to Fig. 18, there is shown an exterior view of a notebook computer 700 having an analogue/digital display adapter, with which an extra external CRT monitor 100 and an LCD monitor 600 can be used, in accordance with an embodiment of the invention.

Fig. 19 illustrates the rear side of the notebook computer 700, where two external video ports 725 and 727, preferably comprising a 15-pin D-Sub female connector, and an MDR female connector, respectively, are provided together with serial/parallel ports. The CRT monitor cable 110 has an analogue 15-pin D-Sub male connector 111, and the LCD monitor cable 610 has an MDR male connector 611. These connectors 111 and 611 can be coupled with the external video ports 725 and 727, respectively, when required. The notebook computer 700 also includes a LCD panel 710 as a main display hingedly attached to the main body 705 of the notebook computer.

Fig. 20 shows a configuration of the above-noted notebook computer system. The notebook computer system comprises a central processing unit (CPU) 730, a BIOS 740, a main memory 750, an I/O controller 760, a video BIOS 721, a video controller 722, a video memory 723, a first transmitter 724, and a second transmitter 726.

The first transmitter 724 is a high speed digital video interconnect device as described above with reference to Fig. 7, for sending video memory data to the LCD panel 710 under control of the video controller 722. The LCD panel 710 also includes a counterpart digital receiver. The second transmitter 726 has the same configuration as that of the digital transmitter 526 shown in Figs. 11 and 13. The second transmitter 726 transmits the digital video data to the extra LCD monitor 600 under control of the video controller 722. The extra LCD monitor 600 also includes a counterpart digital receiver. The video controller 722 also has analogue R, G, B video signal output function that transmits serialised video signals along with horizontal and vertical synchronising signals to the extra CRT monitor 100.

The analogue video signals are sent to the CRT monitor 100 through the external video port 725 and a CRT monitor cable 110. The digital video data from the second transmitter 726 are sent to the extra LCD monitor 600 through another external video port 727 and LCD monitor cable 611.

The above described notebook computer system basically outputs video signals from the video controller 722 to the LCD panel 710. Further, the computer system has a video output path control function that selectively determines the output path to the extra CRT monitor 100 and/or LCD monitor 600 in response to video setup information stored in the system BIOS or a special key input of the keyboard 770. All of the display devices: the LCD panel 710; the CRT monitor 100 and the LCD monitor 600 can be operated simultaneously, or selectively, by appropriate function key input operation.

Further, the above notebook computer system may comprise an LCD monitor cable sensing circuit for detecting connection state of the LCD monitor cable. This monitor cable sensing circuit may be the same or similar to the configuration of the sensing circuit 527 provided in a video card 520a of Fig. 14. If the LCD monitor cable 611 is not connected with the video port 727, the sensing circuit will detect the disconnection state, and prevent the display enable signal (DE) supplied by video controller 722 from being supplied to the second transmitter 726.

In addition, the above described notebook computer system may comprise a power supply control circuit for interrupting supply power directed to the second transmitter 726 when the LCD monitor cable 611 is disconnected from the external video port 727. This power supply control circuit can be configured similarly to the control circuit 528 of the video card 520b of Fig. 15. If the monitor cable 611 is disconnected from the connector 727 or if a power failure occurs in the extra LCD monitor 600, the switches provided between the power supply lines and transmitter 726 are turned off, and the supply voltages DVCC and AVCC are not supplied to the transmitter 726.

Thus, it is possible to prevent unnecessary power consumption in the second transmitter 726 when the extra LCD monitor is not in a normally connected state. In this state, the notebook computer system may change its video output path to the LCD panel and/or the extra CRT monitor. The video controller 722 allows the video signal to be sent to one or both of the LCD panel and the CRT monitor, according to which is/are connected to the video card 520, regardless of the video start-up direction or the video output path set in the computer system.

As is apparent from the foregoing description, the present invention provides for a maximum user convenience in connecting any digital display or analogue display with a computer system. A display adapter may be capable of detecting monitor cable connection state. Further, power saving of the computer system is improved since the display adapter of the invention is capable of reducing power consumed when the monitor cable is disconnected from the computer system, or is not powered.

Although the present invention has been described with reference to a CRT display as an example of an analogue display, and an LCD display as an example of a digital display, the invention may be applied to computers and display adapters using other types of analogue and/or digital display devices.

## Claims

1. A display adapter (520) for use in a computer system, comprising:
a video controller (524) for providing analogue video signals and digital video signals;
a first connector (521) for coupling with an analogue monitor cable connector (111) of an analogue monitor cable (110) for an analogue monitor (100);
a second connector (522) for coupling with a digital monitor cable connector (611) of a digital monitor cable (610) for a digital monitor (600);
a digital transmitter (526) for sending digital video signals to the digital monitor (600) through the second connector (522); and
a monitor power detecting means for detecting the presence of power in the digital monitor (600);
**characterised in that** said video controller is arranged to receive a monitor cable sensing signal (CS) indicating the presence of power in the digital monitor; wherein, in response to said sensing signal, an output path for video signals from said video controller is selected to thereby provide video signals to either the analogue monitor or the digital monitor or simultaneously both the analogue and digital monitor regardless of a preset output path and wherein the display adapter further comprises a power supply control circuit (528) for switching
on/off supply voltages (DVCC,AVCC) of the digital transmitter (526) and the power supply control circuit (528) switches on the supply voltages when the sensing signal (CS) is detected.

2. The display adaptor as claimed in claim 1 wherein a display enable signal (DE) is generated in the video controller (524) to enable corresponding video signals to be sent to the digital monitor (600) when said sensing signal (CS) from the monitor is detected; and
the display enable signal (DE) is disabled to prevent corresponding video signals being sent to the digital monitor (600) when said sensing signal (CS) is not detected.

3. The display adapter as claimed in claim 1, wherein the sensing signal (CS) is generated by means (R1) arranged within the digital monitor.

4. The display adapter as claimed in claim 2, further comprising:
a monitor cable sensing means (527), for detecting the connection of the digital monitor cable connector (611) with the second connector (522), and arranged to receive said sensing signal (CS) and to prevent said display enable signal (DE) from being supplied to said digital transmitter when said sensing signal is not detected.

5. A display adapter as claimed in claim 4, wherein the sensing signal (CS) is generated by means (R1) arranged within the digital monitor.

6. A computer system, **characterised by** comprising:
a display adapter according to any of claims 1 to 5 for providing analogue video signals to an analogue monitor (100) and digital video signals to a digital monitor (600);
a first video port (521) for connecting with an analogue monitor (100);
a second video port (522) for connecting with a digital monitor (600).

7. The computer system of claim 6, wherein the display adapter is incorporated into a main board (510) of the computer system.

8. A portable computer system (700) comprising:
a video controller (722) for providing digital video data;
an LCD panel (710) hingedly attached to a main body (705) of the portable computer;
a first external video port (727) for connecting a cable (610) of an external digital monitor (600);
a first digital transmitter (724) for sending digital video data to the LCD panel;
a second digital transmitter (726) for sending digital video data to the external digital monitor (600);
a monitor power sensing means for detecting the presence of power in the external digital monitor (600) **characterised in that** said video controller is arranged to receive a monitor cable sensing signal (CS) indicating the presence of power in the external digital monitor wherein, in response to said sensing signal, an output path for video signals from said video controller is selected to thereby provide video signals to either the LCD panel or the external digital monitor or simultaneously both the LCD panel and the external digital monitor regardless of a preset output path and wherein the display adapter further comprises a power supply control circuit for switching on/off supply voltages (DVCC,AVCC) of the second digital transmitter (726) and the power supply control circuit switches on the supply voltages when the sensing signal (CS) generated at the external digital monitor (600) is detected.

9. The portable computer system as claimed in claim 8 wherein a display enable signal (DE) is generated in the video controller (722) and sent to the second transmitter (726) to enable the digital video signal to be sent to the external digital monitor when said sensing signal (CS) from the external digital monitor is detected.

10. A portable computer as claimed in claim 8, wherein the external digital monitor (600) includes means to generate the sensing signal (CS) to indicate the presence of power in the external digital monitor (600).

11. A portable computer as claimed in any one of claims 8 to 10, wherein the external digital monitor (600) includes means to generate the sensing signal (CS) to indicate the connection of the external digital monitor cable (610) to the external video port (727).

12. A portable computer as claimed in any of claims 8 to 11, further comprising:
a second external video port (725) for connecting a cable (110) of an analogue monitor (100) and the video controller (722) additionally provides analogue video data.

13. A method of displaying data on a computer monitor comprising:
applying data corresponding to a required image to a video controller (524);
providing analogue video signals and digital video signals in accordance with a required image;
providing a first connector (521) for coupling with an analogue monitor cable connector (111) of an analogue monitor cable (110) for an analogue monitor (100);
providing a second connector (522) for coupling with a digital monitor cable connector (611) of a digital monitor cable (610) for a digital monitor (600);
providing a digital transmitter (526);
sending the digital video signals from the digital transmitter to the digital monitor (600) through the second connector (522) for displaying the required image on the digital monitor (600); and
detecting the presence of power in the digital monitor (600);
**characterised by** at said video controller receiving a monitor cable sensing signal (CS) indicating the presence of power in the digital monitor; and
in response to said sensing signal, selecting an output path for video signals from said video controller to thereby provide video signals to either the analogue monitor or the digital monitor or simultaneously both the analogue and digital monitor regardless of a preset output path and switching on supply voltages (DVCC,AVCC) of the digital transmitter (526) when the signal (CS), indicating the presence of power in the digital monitor (600), is detected; and
switching off supply voltages (DVCC, AVCC) of the digital transmitter (526) when the signal (CS), indicating the presence of power in the digital monitor (600), is not detected.

14. The method as claimed in claim 13 further comprising enabling corresponding video signals to be sent to the digital monitor (600) when the sensing signal (CS) from the monitor, indicating the presence of power in the monitor, is detected; and
not enabling corresponding video signals to be sent to the digital monitor (600) when the signal (CS) from the digital monitor, indicating the presence of power in the digital monitor, is not detected.

15. A method as claimed in claim 13 or 14, further comprising the step of:
generating the sensing signal (CS), to indicate the presence of power in the digital monitor (600), in the digital monitor.

16. A method as claimed in claim 14, further comprising the steps of:
detecting via a monitor cable sensing means (527), the connection of the digital cable connector (611) with the second connector (522); and
at said sensing means (527) receiving said sensing signal (CS) and preventing a display enable signal (DE) generated in the video controller from being supplied to the digital transmitter (526) when said sensing signal is not detected.

17. A method according to claim 16, further comprising the step of:
generating the signal (CS), to indicate the connection of the digital monitor cable (610) to the second connector (522), in the digital monitor.

## Patentansprüche

1. Display-Adapter (520) für die Verwendung in einem Computersystem, der Folgendes umfasst:
einen Video-Controller (524) zur Erzeugung von analogen Videosignalen und digitalen Videosignalen;
ein erstes Anschlussteil (521) für die Verbindung mit einem analogen Monitorkabelanschlussteil (111) eines analogen Monitorkabels (110) für einen analogen Monitor (100);
ein zweites Anschlussteil (522) für die Verbindung mit einem digitalen Monitorkabelanschlussteil (611) eines digitalen Monitorkabels (610) für einen digitalen Monitor (600);
einen Digitalsender (526) zum Senden von digitalen Videosignalen an den digitalen Monitor (600) durch das zweite Anschlussteil (522); und
ein Monitorstromerkennungsmittel zur Erkennung der Anwesenheit von Strom im digitalen Monitor (600);
**dadurch gekennzeichnet, dass** der genannte Video-Controller die Aufgabe hat, ein Monitorkabelerfassungssignal (CS) zu empfangen, das die Anwesenheit von Strom in dem digitalen Monitor anzeigt; wobei als Reaktion auf das genannte Erfassungssignal ein Ausgangspfad für Videosignale von dem genannten Video-Controller gewählt wird, um **dadurch** Videosignale entweder an den analogen Monitor oder an den digitalen Monitor oder gleichzeitig an den analogen und an den digitalen Monitor unabhängig von einem voreingestellten Ausgabepfad zu senden, und wobei der Display-Adapter ferner eine Stromversorgungssteuerschaltung (528) umfasst, um Speisespannungen (DVCC, AVCC) des digitalen Senders (526) ein/auszuschalten, und die Stromversorgungssteuerschaltung (528) die Speisespannungen einschaltet, wenn das Erfassungssignal (CS) erkannt wird.

2. Display-Adapter nach Anspruch 1, wobei ein Display-Enable-Signal (DE) in dem Video-Controller (524) erzeugt wird, um das Senden entsprechender Videosignale an den digitalen Monitor (600) freizugeben, wenn das genannte Erfassungssignal (CS) von dem Monitor erkannt wird; und
das Display-Enable-Signal (DE) gesperrt wird, um zu verhindern, dass entsprechende Videosignale an den digitalen Monitor (600) gesendet werden, wenn das genannte Erfassungssignal (CS) nicht erkannt wird.

3. Display-Adapter nach Anspruch 1, wobei das Erfassungssignal (CS) von im digitalen Monitor angeordneten Mitteln (R1) erzeugt wird.

4. Display-Adapter nach Anspruch 2, der ferner Folgendes umfasst:
ein Monitorkabelerfassungsmittel (527) zur Erkennung der Verbindung zwischen dem digitalen Monitorkabelanschlussteil (611) und dem zweiten Anschlussteil (522) und mit der Aufgabe, das genannte Erfassungssignal (CS) zu empfangen und zu verhindern, dass das genannte Display-Enable-Signal (DE) an den genannten Digitalsender gesendet wird, wenn das genannte Erfassungssignal nicht erkannt wird.

5. Display-Adapter nach Anspruch 4, wobei das Erfassungssignal (CS) von in dem digitalen Monitor angeordneten Mitteln (R1) erzeugt wird.

6. Computersystem, **dadurch gekennzeichnet, dass** es Folgendes umfasst:
einen Display-Adapter nach einem der Ansprüche 1 bis 5 zum Senden von analogen Videosignalen an einen analogen Monitor (100) und von digitalen Videosignalen an einen digitalen Monitor (600);
einen ersten Videoport (521) für den Anschluss eines analogen Monitors (100);
einen zweiten Videoport (522) für den Anschluss eines digitalen Monitors (600).

7. Computersystem nach Anspruch 6, wobei der Display-Adapter in einer Mutterplatine (510) des Computersystems integriert ist.

8. Tragbares Computersystem (700), das Folgendes umfasst:
einen Video-Controller (722) zur Erzeugung von digitalen Videodaten;
eine LCD-Tafel (710), die schwenkbar an einem Hauptkörper (705) des tragbaren Computers befestigt ist;
einen ersten externen Videoport (727) für den Anschluss eines Kabels (610) eines externen digitalen Monitors (600);
einen ersten Digitalsender (724) zum Senden von digitalen Videodaten an die LCD-Tafel;
einen zweiten Digitalsender (726) zum Senden von digitalen Videodaten an den externen digitalen Monitor (600);
ein Monitorstromerfassungsmittel zur Erkennung der Anwesenheit von Strom in dem externen digitalen Monitor (600), **dadurch gekennzeichnet, dass** der genannte Video-Controller die Aufgabe hat, ein Monitorkabelerfassungssignal (CS) zu empfangen, das die Anwesenheit von Strom in dem externen digitalen Monitor anzeigt, wobei als Reaktion auf das genannte Erfassungssignal ein Ausgabepfad für Videosignale von dem genannten Video-Controller gewählt wird, um **dadurch** Videosignale entweder an die LCD-Tafel oder den externen digitalen Monitor oder gleichzeitig sowohl an die LCD-Tafel als auch an den externen digitalen Monitor unabhängig von einem voreingestellten Ausgabepfad zu senden, und wobei der Display-Adapter ferner eine Stromversorgungssteuerschaltung umfasst, um Speisespannungen (DVCC, AVCC) des zweiten Digitalsenders (726) ein/auszuschalten, und die Stromversorgungssteuerschaltung die Speisespannungen einschaltet, wenn das am externen digitalen Monitor (600) erzeugte Erfassungssignal (CS) erkannt wird.

9. Tragbares Computersystem nach Anspruch 8, wobei ein Display-Enable-Signal (DE) im Video-Controller (722) erzeugt und an den zweiten Sender (726) gesendet wird, um das Senden des digitalen Videosignals an den externen digitalen Monitor zu ermöglichen, wenn das genannte Erfassungssignal (CS) von dem externen digitalen Monitor erkannt wird.

10. Tragbarer Computer nach Anspruch 8, wobei der externe digitale Monitor (600) Mittel zur Erzeugung des Erfassungssignals (CS) beinhaltet, um die Anwesenheit von Strom in dem externen digitalen Monitor (600) anzuzeigen.

11. Tragbarer Computer nach einem der Ansprüche 8 bis 10, wobei der externe digitale Monitor (600) Mittel zur Erzeugung des Erfassungssignals (CS) beinhaltet, um die Verbindung des externen digitalen Monitorkabels (610) mit dem externen Videoport (727) anzuzeigen.

12. Tragbarer Computer nach einem der Ansprüche 8 bis 11, der ferner einen zweiten externen Videoport (725) für den Anschluss eines Kabels (110) eines analogen Monitors (100) umfasst, wobei der Video-Controller (722) zusätzlich analoge Videodaten liefert.

13. Verfahren zum Anzeigen von Daten auf einem Computer-Monitor, das Folgendes umfasst:
Senden von Daten, die einem benötigten Bild entsprechen, an einen Video-Controller (524);
Bereitstellen von analogen Videosignalen und digitalen Videosignalen gemäß eines benötigten Bilds;
Bereitstellen eines ersten Anschlussteils (521) für die Verbindung eines analogen Monitorkabelanschlussteils (111) eines analogen Monitorkabels (110) für einen analogen Monitor (100);
Bereitstellen eines zweiten Anschlussteils (522) für die Verbindung eines digitalen Monitorkabelanschlussteils (611) eines digitalen Monitorkabels (610) für einen digitalen Monitor (600);
Bereitstellen eines Digitalsenders (526);
Senden der digitalen Videosignale von dem Digitalsender zum digitalen Monitor (600) durch das zweite Anschlussteil (522) zum Anzeigen des benötigten Bildes auf dem digitalen Monitor (600); und
Erkennen der Anwesenheit von Strom im digitalen Monitor (600);
**dadurch gekennzeichnet, dass** der genannte Video-Controller ein Monitorkabelerfassungssignal (CS) empfängt, das die Anwesenheit von Strom im digitalen Monitor anzeigt; und
als Reaktion auf das genannte Erfassungssignal, Wählen eines Ausgabepfades für Videosignale von dem genannten Video-Controller, um **dadurch** Videosignale entweder an den analogen Monitor oder an den digitalen Monitor oder gleichzeitig sowohl an den analogen als auch an den digitalen Monitor unabhängig von einem voreingestellten Ausgabepfad zu senden, und Einschalten von Speisespannungen (DVCC, AVCC) des Digitalsenders (526), wenn das Signal (CS), das die Anwesenheit von Strom im digitalen Monitor (600) anzeigt, erkannt wird; und
Abschalten von Speisespannungen (DVCC, AVCC) des Digitalsenders (526), wenn das Signal (CS), das die Anwesenheit von Strom im digitalen Monitor (600) anzeigt, nicht erkannt wird.

14. Verfahren nach Anspruch 13, das ferner das Freigeben des Sendens entsprechender Videosignale an den digitalen Monitor (600) umfasst, wenn das Erfassungssignal (CS) von dem Monitor, das die Anwesenheit von Strom im Monitor anzeigt, erkannt wird; und
Nichtfreigeben des Sendens von entsprechenden Videosignalen an den digitalen Monitor (600), wenn das Signal (CS) an den digitalen Monitor, das die Anwesenheit von Strom in dem digitalen Monitor anzeigt, nicht erkannt wird.

15. Verfahren nach Anspruch 13 oder 14, das ferner den Schritt des Erzeugens des Erfassungssignals (CS), um die Anwesenheit von Strom in dem digitalen Monitor (600) anzuzeigen, in dem digitalen Monitor umfasst.

16. Verfahren nach Anspruch 14, das ferner Folgendes umfasst:
Erkennen, über ein Monitorkabelerfassungsmittel (527), der Verbindung zwischen dem digitalen Kabelanschlussteil (611) und dem zweiten Anschlussteil (522); und
an dem genannten Erfassungsmittel (527), Empfangen des genannten Erfassungssignals (CS) und Verhindern, dass ein im Video-Controller erzeugtes Display-Enable-Signal (DE) an den Digitalsender (526) gesendet wird, wenn das genannte Erfassungssignal nicht erkannt wird.

17. Verfahren nach Anspruch 16, das ferner den Schritt des Erzeugens des Signals (CS) zum Anzeigen der Verbindung zwischen dem digitalen Monitorkabel (610) und dem zweiten Anschlussteil (522) im digitalen Monitor umfasst.

## Revendications

1. Adaptateur d'affichage (520) destiné à être utilisé dans un système informatique, comprenant :
un contrôleur vidéo (524) servant à fournir des signaux vidéo analogiques et des signaux vidéo numériques ;
un premier connecteur (521) prévu pour s'accoupler avec un connecteur de câble de moniteur analogique (111) d'un câble de moniteur analogique (110) pour un moniteur analogique (100) ;
un deuxième connecteur (522) prévu pour s'accoupler avec un connecteur de câble de moniteur numérique (611) d'un câble de moniteur numérique (610) pour un moniteur numérique (600) ;
un émetteur-récepteur numérique (526) servant à envoyer des signaux vidéo numériques au moniteur numérique (600) par l'intermédiaire du deuxième connecteur (522) ; et
un moyen détecteur d'énergie électrique de moniteur servant à détecter la présence d'énergie électrique dans le moniteur numérique (600) ;
**caractérisé en ce que** ledit contrôleur vidéo est agencé de façon à recevoir un signal (CS) de détection de câble de moniteur indiquant la présence d'énergie électrique dans le moniteur numérique ; cas dans lequel, en réaction audit signal de détection, un trajet de sortie pour les signaux vidéo provenant dudit contrôleur vidéo est sélectionné afin de fournir ainsi des signaux vidéo, soit au moniteur analogique soit au moniteur numérique, soit simultanément au moniteur analogique et au moniteur numérique, et ceci indépendamment d'un trajet de sortie préréglé, et dans lequel l'adaptateur d'affichage comprend en outre un circuit de commande d'alimentation électrique (528) servant à activer/désactiver les tensions d'alimentation (DVCC, AVCC) de l'émetteur-récepteur numérique (526) et le circuit de commande d'alimentation électrique (528) active les tensions d'alimentation lorsque le signal de détection (CS) est détecté.

2. L'adaptateur d'affichage, selon la revendication 1, dans lequel un signal de validation d'affichage (DE) est généré dans le contrôleur vidéo (524) pour permettre l'acheminement des signaux vidéo correspondants vers le moniteur numérique (600) lorsque ledit signal de détection (CS) en provenance du moniteur a été détecté ; et
le signal de validation d'affichage (DE) est désactivé pour empêcher que les signaux vidéo correspondants ne soient acheminés au moniteur numérique (600) lorsque ledit signal de détection (CS) n'a pas été détecté.

3. L'adaptateur d'affichage, selon la revendication 1, dans lequel le signal de détection (CS) est généré par un moyen (R1) qui est disposé à l'intérieur du moniteur numérique.

4. L'adaptateur d'affichage, selon la revendication 2, comprenant en outre :
un moyen détecteur (527) de câble de moniteur servant à détecter le raccordement du connecteur de câble du moniteur numérique (611) avec le deuxième connecteur (522), et agencé de façon à recevoir ledit signal de détection (CS) et à empêcher que ledit signal de validation d'affichage (DE) ne soit fourni audit émetteur-récepteur numérique lorsque ledit signal de détection n'est pas détecté.

5. Adaptateur d'affichage, selon la revendication 4, dans lequel le signal de détection (CS) est généré par un moyen (R1) qui est disposé à l'intérieur du moniteur numérique.

6. Système informatique, **caractérisé par le fait qu'**il comprend :
un adaptateur d'affichage, selon l'une quelconque des revendications 1 à 5, servant à fournir des signaux vidéo analogiques à un moniteur analogique (100) et des signaux vidéo numériques à un moniteur numérique (600) ;
un premier port vidéo (521) destiné à être raccordé à un moniteur analogique (100) ;
un deuxième port vidéo (522) destiné à être raccordé à un moniteur numérique (600).

7. Le système informatique de la revendication 6, dans lequel l'adaptateur d'affichage est incorporé à une carte mère (510) du système informatique.

8. Système informatique portable (700) comprenant :
un contrôleur vidéo (722) pour fournir des données vidéo numériques ;
un écran à cristaux liquides (710) qui est attaché par des charnières à un corps principal (705) de l'ordinateur portable ;
un premier port vidéo externe (727) servant à raccorder un câble (610) d'un moniteur numérique externe (600) ;
un premier émetteur-récepteur numérique (724) destiné à envoyer des données vidéo numériques à l'écran à cristaux liquides ;
un deuxième émetteur-récepteur numérique (726) destiné à envoyer des données vidéo numériques au moniteur numérique externe (600) ;
un moyen détecteur d'énergie électrique de moniteur servant à détecter la présence d'énergie électrique dans le moniteur numérique externe (600), **caractérisé en ce que** ledit contrôleur vidéo est agencé de façon à recevoir un signal (CS) de détection de câble de moniteur indiquant la présence d'énergie électrique dans le moniteur numérique externe ; cas dans lequel, en réaction audit signal de détection, un trajet de sortie pour les signaux vidéo provenant dudit contrôleur vidéo est sélectionné afin de fournir ainsi des signaux vidéo, soit à l'écran à cristaux liquides, soit au moniteur numérique externe, soit simultanément à l'écran à cristaux liquides et au moniteur numérique externe, et ceci indépendamment d'un trajet de sortie préréglé, et dans lequel l'adaptateur d'affichage comprend en outre un circuit de commande d'alimentation électrique servant à activer/désactiver les tensions d'alimentation (DVCC, AVCC) du deuxième émetteur-récepteur numérique (726) et le circuit de commande d'alimentation électrique active les tensions d'alimentation lorsque le signal de détection (CS), généré au niveau du moniteur numérique externe (600), a été détecté.

9. Le système informatique portable, selon la revendication 8, dans lequel un signal de validation d'affichage (DE) est généré dans le contrôleur vidéo (722) et est envoyé au deuxième émetteur-récepteur (726) pour permettre l'acheminement du signal vidéo numérique vers le moniteur numérique externe lorsque ledit signal de détection (CS) en provenance du moniteur numérique externe a été détecté.

10. Système informatique portable, selon la revendication 8, dans lequel le moniteur numérique externe (600) inclut un moyen permettant de générer le signal de détection (CS) afin d'indiquer la présence d'énergie électrique dans le moniteur numérique externe (600).

11. Système informatique portable, selon l'une quelconque des revendications 8 à 10, dans lequel le moniteur numérique externe (600) inclut un moyen permettant de générer le signal de détection (CS) afin d'indiquer le raccordement du câble de moniteur numérique externe (610) au port vidéo externe (727).

12. Système informatique portable, selon l'une quelconque des revendications 8 à 11, comprenant en outre :
un deuxième port vidéo externe (725) servant à raccorder un câble (110) d'un moniteur analogique (100), alors que le contrôleur vidéo (722) fournit en plus des données vidéo analogiques.

13. Procédé servant à afficher des données sur un moniteur d'ordinateur et qui consiste à :
appliquer, à un contrôleur vidéo (524), des données correspondant à une image requise ;
fournir des signaux vidéo analogiques et des signaux vidéo numériques, en conformité avec une image requise ;
mettre à disposition un premier connecteur (521) prévu pour s'accoupler avec un connecteur de câble de moniteur analogique (111) d'un câble de moniteur analogique (110) pour un moniteur analogique (100) ;
mettre à disposition un deuxième connecteur (522) prévu pour s'accoupler avec un connecteur de câble de moniteur numérique (611) d'un câble de moniteur numérique (610) pour un moniteur numérique (600) ;
mettre à disposition un émetteur-récepteur numérique (526) ;
envoyer les signaux vidéo numériques, provenant de l'émetteur-récepteur numérique, au moniteur numérique (600) par l'intermédiaire du deuxième connecteur (522) afin d'afficher l'image requise sur le moniteur numérique (600) ; et
détecter la présence d'énergie électrique dans le moniteur numérique (600) ;
**caractérisé**, au niveau dudit contrôleur vidéo, par l'action consistant à recevoir un signal (CS) de détection de câble de moniteur indiquant la présence d'énergie électrique dans le moniteur numérique ; et
en réaction audit signal de détection, à sélectionner un trajet de sortie pour les signaux vidéo provenant dudit contrôleur vidéo afin de fournir ainsi des signaux vidéo, soit au moniteur analogique soit au moniteur numérique, soit simultanément au moniteur analogique et au moniteur numérique, et ceci indépendamment d'un trajet de sortie préréglé, et à activer les tensions d'alimentation (DVCC, AVCC) de l'émetteur-récepteur numérique (526) lorsque le signal (CS) indiquant la présence d'énergie électrique dans le moniteur numérique (600), a été détecté ; et
à désactiver les tensions d'alimentation (DVCC, AVCC) de l'émetteur-récepteur numérique (526) lorsque le signal (CS) indiquant la présence d'énergie électrique dans le moniteur numérique (600), n'a pas été détecté.

14. Le procédé, selon la revendication 13, comprenant en outre l'action consistant à permettre l'acheminement des signaux vidéo correspondants vers le moniteur numérique (600) lorsque le signal de détection (CS) en provenance du moniteur, indiquant la présence d'énergie électrique dans le moniteur, a été détecté ; et
à interdire l'acheminement des signaux vidéo correspondants vers le moniteur numérique (600) lorsque le signal (CS) en provenance du moniteur numérique, indiquant la présence d'énergie électrique dans le moniteur numérique, n'a pas été détecté.

15. Procédé, selon la revendication 13 ou 14, comprenant en outre l'étape consistant à :
générer, dans le moniteur numérique, le signal de détection (CS) afin d'indiquer la présence d'énergie électrique dans le moniteur numérique (600).

16. Procédé, selon la revendication 14, comprenant en outre les étapes consistant à :
détecter, par l'intermédiaire d'un moyen détecteur (527) de câble de moniteur, le raccordement du connecteur de câble numérique (611) avec le deuxième connecteur (522) ; et
au niveau dudit moyen détecteur (527), recevoir ledit signal de détection (CS) et empêcher qu'un signal de validation d'affichage (DE), généré dans le contrôleur vidéo, ne soit fourni à l'émetteur-récepteur numérique (526) lorsque ledit signal de détection n'est pas détecté.

17. Procédé conforme à la revendication 16, comprenant en outre l'étape consistant à :
générer, dans le moniteur numérique, le signal (CS) afin d'indiquer le raccordement du câble de moniteur numérique (610) au deuxième connecteur.
